# EUROPEAN PATENT APPLICATION

(11) **EP 4 810 322 A1**
(43) Date of publication of application: **23.09.2026**
(21) Application number: 26165748.0
(22) Date of filing: 18.03.2026
(51) Int. Cl.: B60R 9/042, B60R 9/048, B60P 7/08

(54) **LADDER CLAMPIG DEVICE FOR VEHICLES, AND RELATIVE ASSEMBLY METHOD**

(30) Priority: 20.03.2025 IT 202500005745
(71) Applicant: Lokhen S.r.l., 70022 Altamura, Bari (IT)
(72) Inventor: BARATTINI, Daniele, I-70022 Altamura, BARI (IT); GRECO, Luca Oronzo, I-70022 Altamura, BARI (IT)
(74) Representative: Mitola, Marco

(57) **Abstract**

A ladder clamping device (4) for vehicles, comprising an elongated main body (16), parallel to a longitudinal direction (X-X), the main body (16) being provided with a lower wall (20) facing a ladder (8) to be secured, a ratchet mechanism (44), housed in said main body (16) and comprising a spool (48) rotatable about a rotation axis (R-R) perpendicular to the longitudinal direction (X-X), the spool (48) being provided with an external toothing (52) and a return spring (64), in which the ratchet mechanism (44) is mechanically connected to an actuation lever (60) protruding from said main body (16) and parallel to said longitudinal direction (X-X), the actuation lever (60) being configured to actuate the rotation of the spool (48), thus overcoming the resistance of the return spring (64). The device further comprises flexible locking means (68) for said ladder (8), fastened to the spool (48) at a first end (72) thereof and provided with a locking buckle and/or a locking hook (76), at a second end (80), opposite to said first end (72). The flexible locking means (68) are at least partially wound on the spool (48) so as to wind and unwind in agreement with the rotation direction of the spool (48), and the return spring (64) biases the spool (48) in rotation according to a winding direction of the flexible locking means (68).

## Description

### FIELD OF APPLICATION

The present invention relates to a ladder clamping device for vehicles, adapted to secure/release a stepladder on a roof rack mounted on the roof of vehicles, and the relative assembly method.

### BACKGROUND ART

The prior art has several solutions of ladder clamping devices that serve to secure and release a ladder previously resting horizontally on at least two bars of a roof rack mounted on the roof of a vehicle, conventionally an automobile or an industrial vehicle such as, for example, a van.

Such known devices conventionally comprise a main body, adapted to come into contact with the ladder, and a metal rod, vertical and perpendicular to the body and to the ladder to be secured, which ends with a rigid hook. The rigid hook extends beyond the ladder and is configured to hook onto a portion of the roof rack bar; thereby, the ladder is firmly secured between the roof rack and the ladder clamping device. Securing the ladder requires the use of at least two ladder clamping devices, adapted to ensure the securing on the two opposite ends of the ladder itself.

A mechanism allowing the metal rod to be moved vertically so as to bring the hook into such a position as to engage the roof rack bar is required in order to firmly secure the ladder. Obviously, the ladder clamping device must be configured to adapt to roof racks and ladders having different sizes and shapes.

The mechanisms of the known type comprise levers, wheels or wing nuts which allow adjusting the vertical position of the metal rod and the relative securing.

The known solutions are not free from drawbacks.

In fact, rigid metal rods do not guarantee compatibility with all possible types of ladders and with all types of roof rack bars on the market. Further, the metal rod on the roof of the vehicle generates noise and aerodynamic turbulence. Further, the shape of the rigid metal hook allows adherence to a limited part of the roof rack bar.

The very presence of the metal rod constitutes a rigid body that protrudes from the overall outline and therefore implies safety risks.

Further, it is necessary for the device to be relatively easy and quick to assemble so as to reduce the overall cost thereof. The known solutions, albeit secure from the standpoint of securing the ladder on the roof of the vehicle, result in relatively high manufacturing and assembly costs.

### PRESENTATION OF THE INVENTION

Therefore, the need is felt to solve the drawbacks and limitations mentioned with reference to the prior art.

In other words, there is a need to provide a ladder clamping device that, on the one hand, is safe, versatile, and not bulky, and that, on the other hand, is also quick, practical, and affordable to assemble.

Such a need is met by a ladder clamping device according to claim 1, and by a method of assembling a ladder clamping device according to claim 15.

### DESCRIPTION OF THE DRAWINGS

Further features and advantages of the present invention will be more comprehensible from the following description of preferred, non-limiting embodiments thereof, in which:

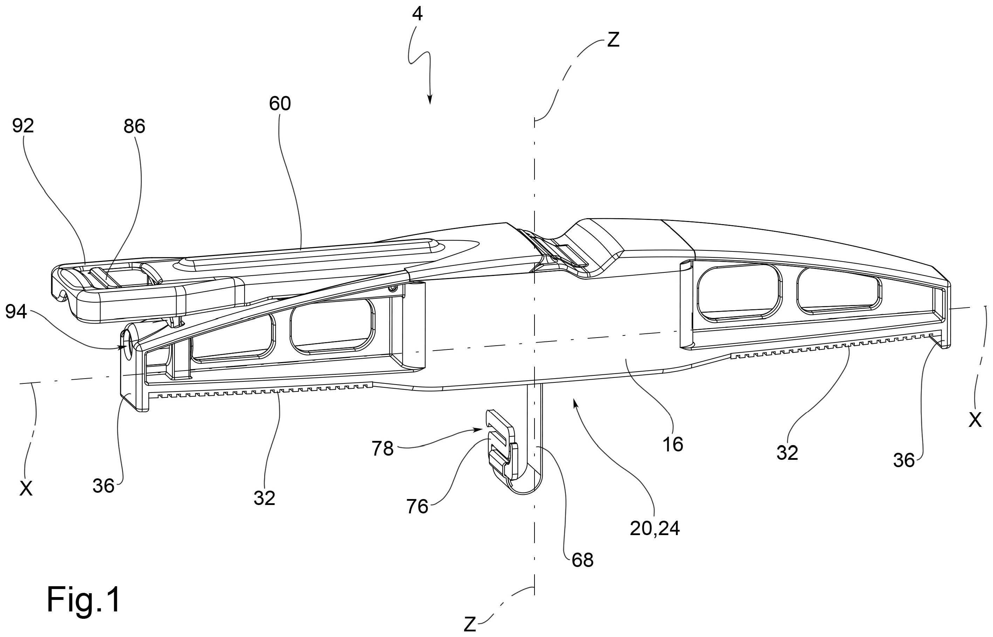

Figure 1 shows a perspective view, in an assembled configuration, of a ladder clamping device according to a possible embodiment of the present invention;

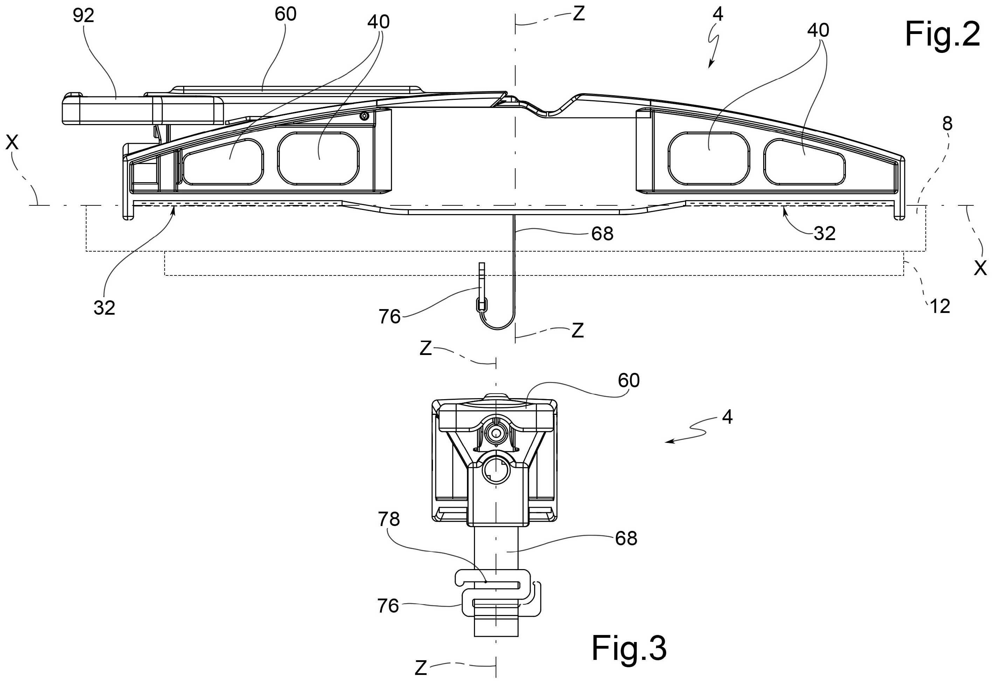

Figure 2 shows a front view of the ladder clamping device of Figure 1;
Figure 3 shows a side view of the ladder clamping device of Figure 1;

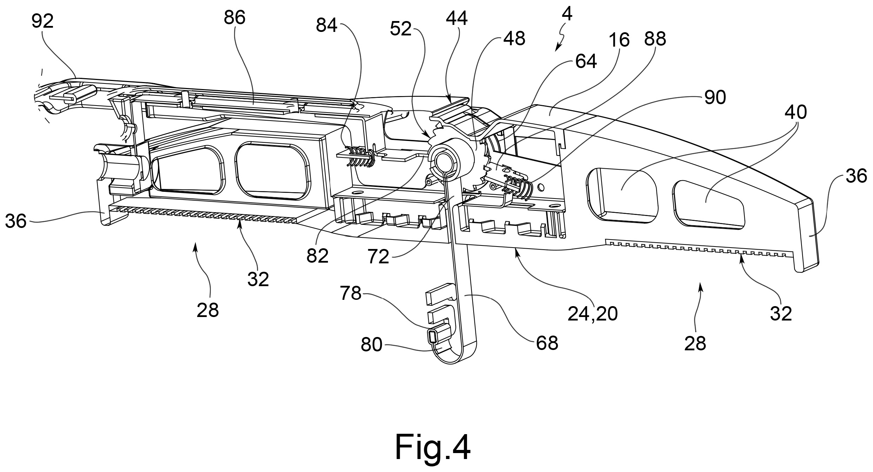

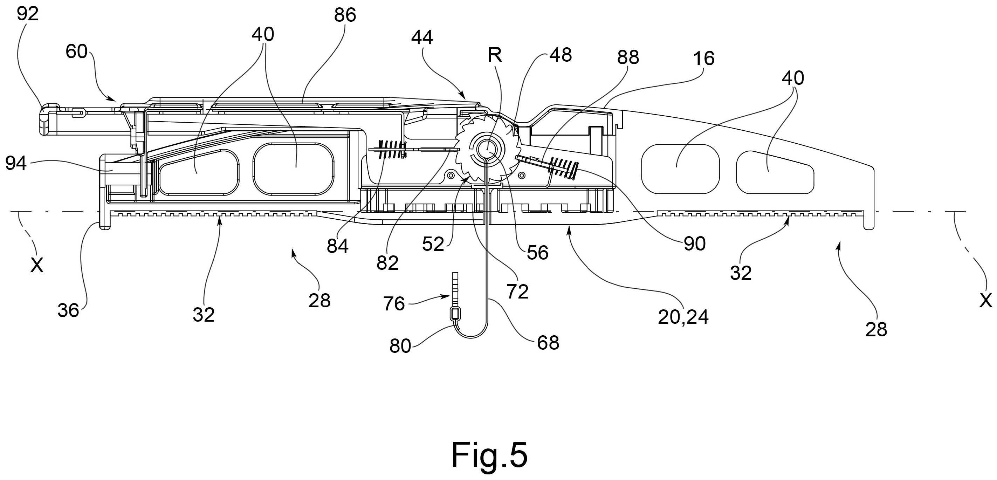

Figures 4-5 show perspective views, in longitudinal section, from different angles, of the ladder clamping device of Figure 1;

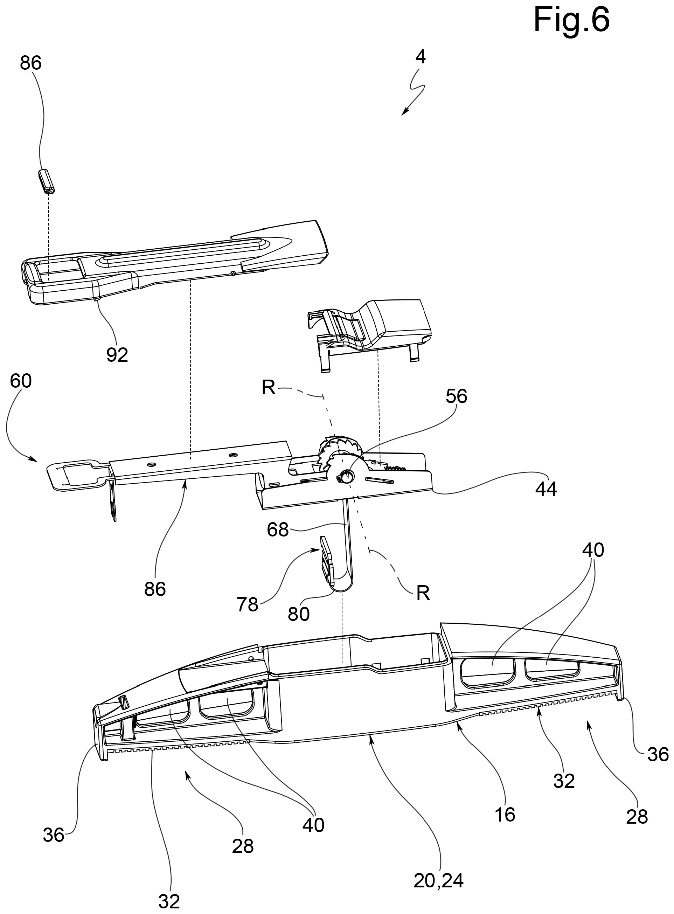

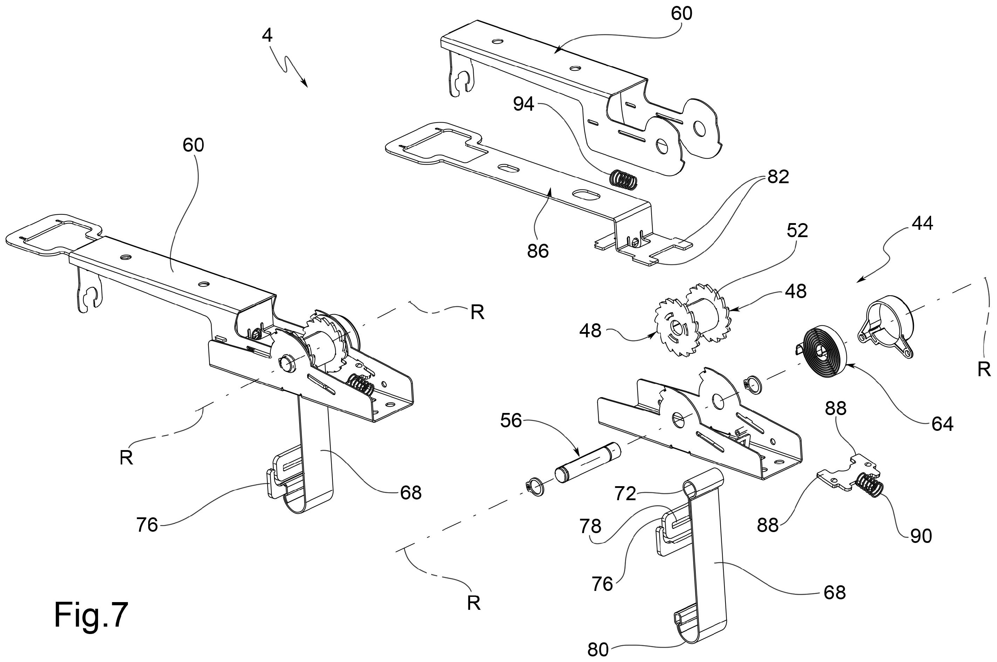

Figures 6-7 show exploded views, from different angles, of the ladder clamping device of Figure 1;
Figures 8-10 show perspective views of a sequence for securing a ladder clamping device according to the present invention;

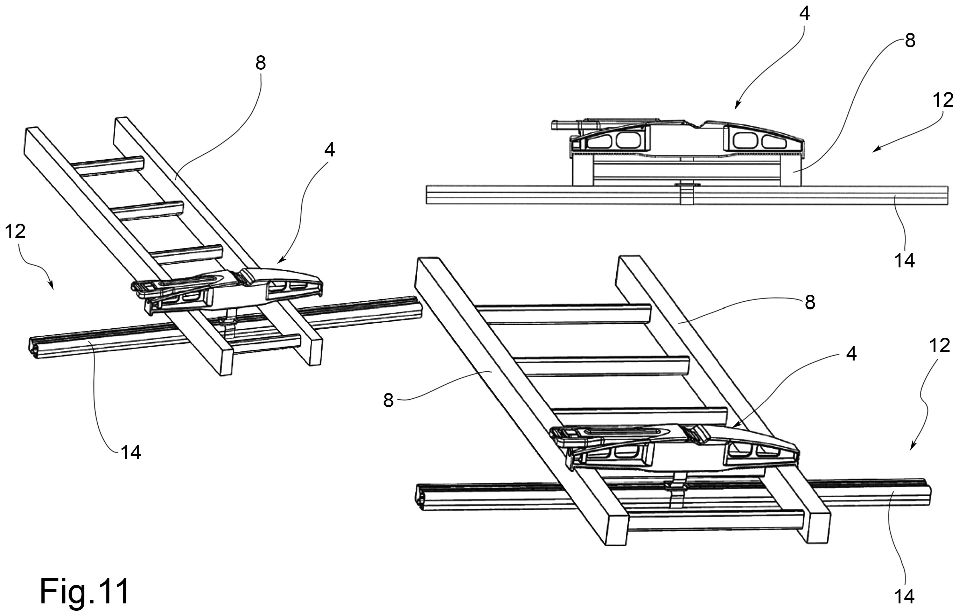

Figure 11 shows views of applications of the ladder clamping device of the present invention, on different types of ladders;

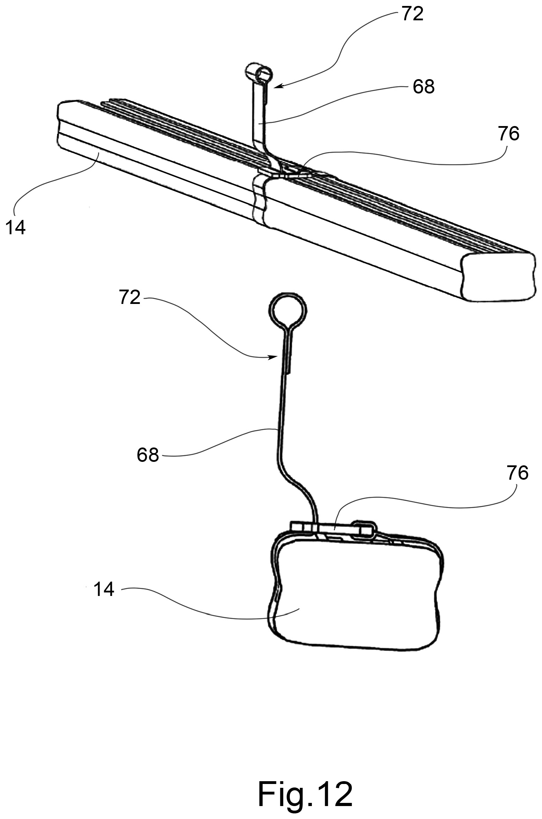

Figure 12 shows views of flexible locking means applied to a roof rack bar according to a possible embodiment of the present invention;

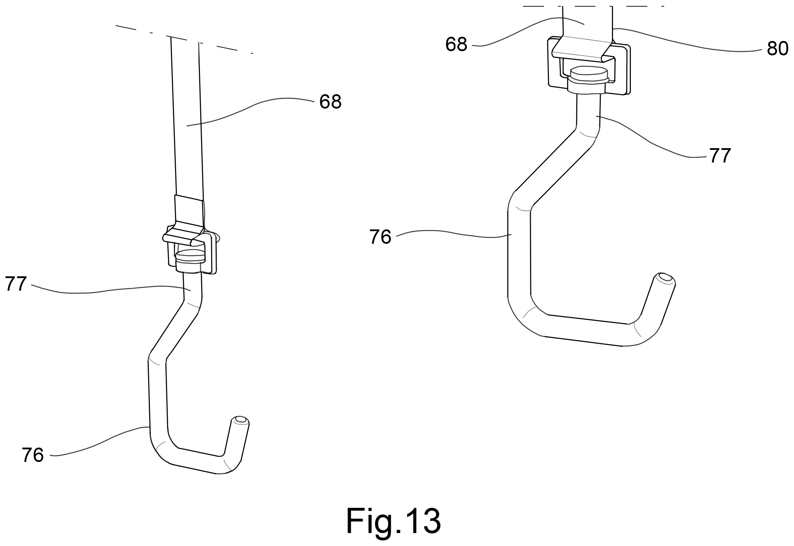

Figure 13 shows views of flexible locking means applied to a roof rack bar according to a further possible embodiment of the present invention;

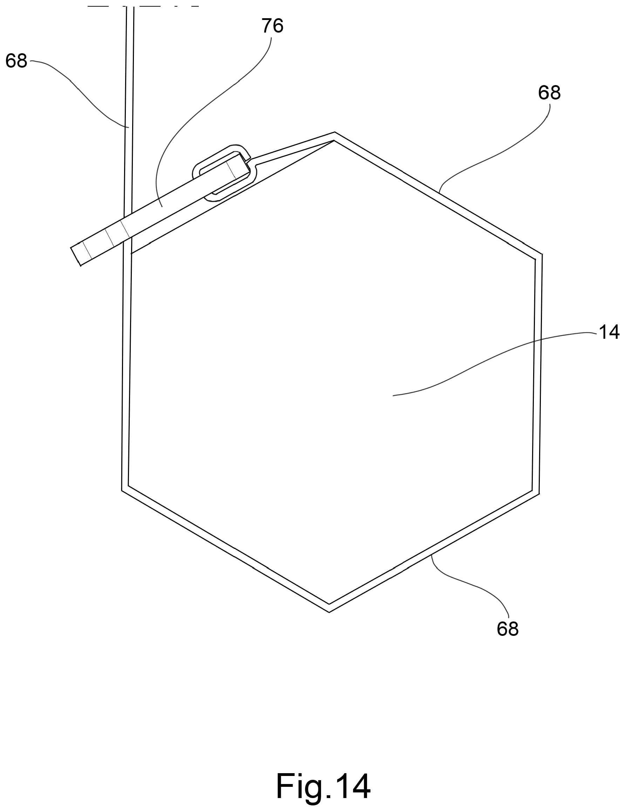

Figure 14 shows flexible locking means, for example a strap, applied to a roof rack bar;

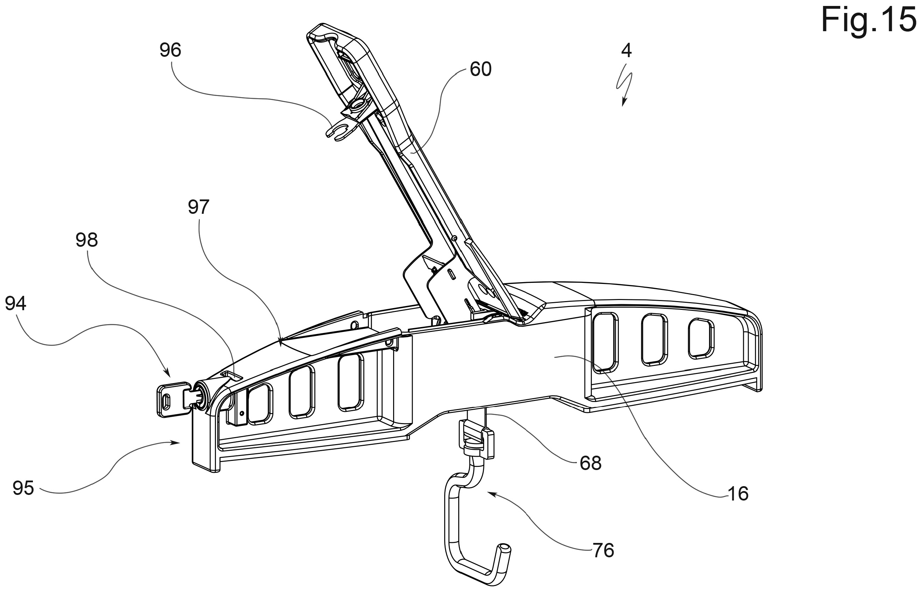

Figure 15 shows a perspective view, in an assembled and open configuration, of a ladder clamping device according to a further possible embodiment of the present invention;

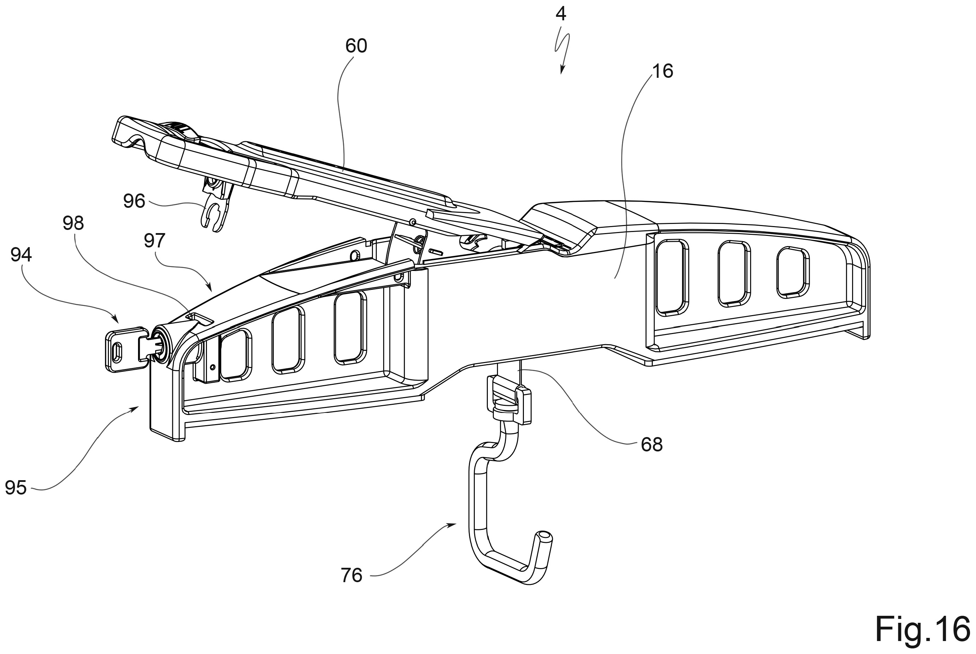

Figure 16 shows a perspective view, in an assembled and semi-open configuration, of the ladder clamping device of Figure 15;
Figure 17a shows a perspective view, in an assembled and closed configuration, of the ladder clamping device of Figure 15;
Figure 17b shows a sectional view of the ladder clamping device of Figure 15, at the lock;
Figures 18-27 show perspective views of an assembly sequence of a ladder clamping device according to the present invention.

The elements or parts of elements common to the embodiments described below will be indicated by the same reference numerals.

### DETAILED DESCRIPTION

With reference to the aforesaid figures, reference numeral 4 globally indicates an overall diagrammatic view of a ladder clamping device for vehicles according to the present invention, where a ladder 8 is previously resting on a roof rack 12 of the vehicle, where the roof rack 12 conventionally consists of a structure comprising a plurality of bars 14 suitably constrained to one another. Said bars 14 may have a circular, rectangular, or elliptical section, or a regular or irregular polygonal section, or a curvilinear section in general. Ladder 8 may also be a stepladder and is preferably of the rung type. For the purposes of the present invention, the size, material, or type of stepladder is not relevant.

For the purposes of the present invention, neither the type of vehicle on which the ladder is mounted nor the type of roof rack previously anchored to the roof of the vehicle is relevant.

The ladder clamping device 4 for vehicles comprises an elongated main body 16, parallel to a longitudinal direction X-X, the main body 16 being provided with a lower wall 20 facing an associable ladder 8 to be secured.

According to an embodiment, the lower wall 20 comprises a central base 24 and a pair of lateral recesses 28, on opposite sides of the central base 24, along the longitudinal direction X-X. The lateral recesses 28 are shaped so as to come into contact with a leg of ladder 8 and secure it against the bars 14 of the roof rack 12.

In general, the central base 24 consists of a stiffening element of the ladder clamping device 4, capable of supporting the tension of the strap element of the device itself, as described in greater detail below.

Said lateral recesses 28 are retracted with respect to the central base 24 along a vertical direction Z-Z, perpendicular to the longitudinal direction X-X. Each lateral recess 28 in effect creates a seat for at least partially housing a portion of said ladder 8 to be secured.

According to an embodiment, said lateral recesses 28 are provided with a lower knurl 32 and/or lateral containment strips 36. The lower knurl 32 may be replaced or supplemented by any surface treatment or processing adapted to increase the grip with ladder 8.

The lower knurl 32 increases the grip between the ladder clamping device 4 and the associable ladder 8.

According to a further embodiment, a plate or co-molded portion configured so as to increase the grip with the associable ladder 8 is associated with said lateral recesses 28.

The lateral containment strips 36 are useful so as to improve the grip of the ladder clamping device 4 on ladder 8, in the lateral direction.

The main body 16 may be provided with lightening portions 40 in the form of windows or through openings through the main body 16, at the lateral recesses 28. In addition to reducing the overall mass of the ladder clamping device 4, said lightening portions 40 also reduce the front surface of the ladder clamping device 4 impacting with the air: thereby, positive effects are obtained for the overall aerodynamic resistance of the ladder clamping device 4 and for the relative aerodynamic noise/rustling generated when the vehicle is travelling.

According to an embodiment, the central base 24 has a through opening 25 having a slot 26 and a central enlargement 27; further, a removable cap 29, which is at least partially counter-shaped with respect to the through opening 25 so as to reduce the passage lumen overall thereof, is associated with the central base 24. For example, the removable cap 29 is a plate preassembled on the flexible locking means 68. According to an embodiment, the removable cap 29 is made of two shells 30 that are separable from each other, for example, according to a shape coupling. Once associated with each other, said shells 30 define a through channel 31. The shells preferably comprise an upper edge 33 defining an undercut with respect to said through opening 25, according to a direction of extraction of the shells 30 from inside of the main body 16 downwards, i.e. towards the associable scale 8.

The ladder clamping device 4 further comprises a ratchet mechanism 44, housed in said main body 16 and comprising a spool 48 rotatable about a rotation axis R-R perpendicular to the longitudinal direction X-X.

Spool 48 is provided with an external toothing 52 and rotates about a pin 56 defining said rotation axis R-R.

Further, spool 48 is provided with a return spring 64. For example, said return spring 64 is a spiral spring, coaxial to said spool 48.

The ratchet mechanism 44 is mechanically connected to an actuation lever 60 protruding from said main body 16 and parallel to said longitudinal direction X-X; in particular, the actuation lever 60 is configured to actuate the rotation of spool 48, thus overcoming the resistance of the return spring 64.

The ladder clamping device 4 further comprises flexible locking means 68 for said ladder 8, fastened to spool 48 at a first end 72 thereof and provided with a locking buckle and/or a locking hook 76 at a second end 80, opposite to said first end 72. The flexible locking means 68 may comprise a strap, a rope, a cable, a chain or similar elements that are at least partially flexible and windable around spool 48.

According to an embodiment, said locking buckle 76 is provided with at least one laterally open slit 78.

The locking hook 76 is preferably provided with a rotatable eyelet 77.

The flexible locking means 68 are at least partially wound on spool 48 so as to wind and unwind in agreement with the rotation direction of spool 48; the return spring 64 biases, i.e. returns, spool 48 in rotation according to a winding direction of the flexible locking means 68.

According to an embodiment, the rotatable spool 48 is associated with at least a first stop 82, normally engaged with the external toothing 52. The first stop 82 is shaped so that, when in the engagement configuration, it makes the actuation lever 60 integral with spool 48 rotating in a winding direction of the flexible locking means 68. At the same time, the first stop 82 allows the rotation of spool 48 in the winding direction of the flexible locking means 68.

Preferably, said first stop 82 is biased into abutment against the external toothing 52 by a first spring 84.

According to an embodiment, the actuation lever 60 is provided with a locking/unlocking element 86, operatively connected to said first stop 82 so as to allow the transition of the first stop 82 from an engagement condition to a disengagement condition with respect to the external toothing 52.

For example, said locking/unlocking element 86 is a slider that is movable so as to allow the disengagement of the first stop 82 from the external toothing 52.

For example, said movable slider is part of a plate that is integral with said first stop 82.

According to an embodiment, the rotatable spool 48 is provided with a second stop 88 always engaged with the external toothing 52, in agreement with the first stop 82.

For example, the second stop 88 is biased into abutment against the external toothing 52 by a second spring 90.

Preferably, the second stop 88 is arranged in a position that is diametrically opposite to the first stop 82, with respect to the rotation axis R-R of spool 48.

For example, the actuation lever 60 is provided with a handle 92 that is cantilevered, with respect to the main body 16, along the longitudinal direction X-X.

According to an embodiment, the locking buckle or locking hook 76 is shaped so as to be able to pass through said through opening 25 of the central base 24 of the main body 16, and so as not to be able to pass through the through channel 31 defined by said shells 30.

Instead, the through channel 31 is configured so as to allow the passage through and the sliding of the flexible locking means 68.

According to an embodiment, said actuation lever 60 is provided with a lock 94 for locking the actuation lever 60 on the main body 16. The purpose of such a lock 94 is to increase security and prevent the theft of ladder 8.

According to an advantageous embodiment, lock 94 is arranged on a lateral end 95 of the main body 16 so as to be easily accessible by a user from the outside. Advantageously, the actuation lever 60 is integral with a closing portion 96, for example, fork-shaped, positioned and shaped so that said closing portion 96 is aligned with lock 94, in a lowered actuation lever 60 configuration.

The mutual positioning of the closing portion 96 and lock 94 advantageously allows the lock to be easily reached by a hand and therefore, the actuation lever 60 to be locked/unlocked. Further, by virtue of the presence of the closing portion 96 directly on the actuation lever 60, towards handle 92, the use of mechanical returns on the central part of the main body 16 may be avoided, as occurs in some solutions of the prior art.

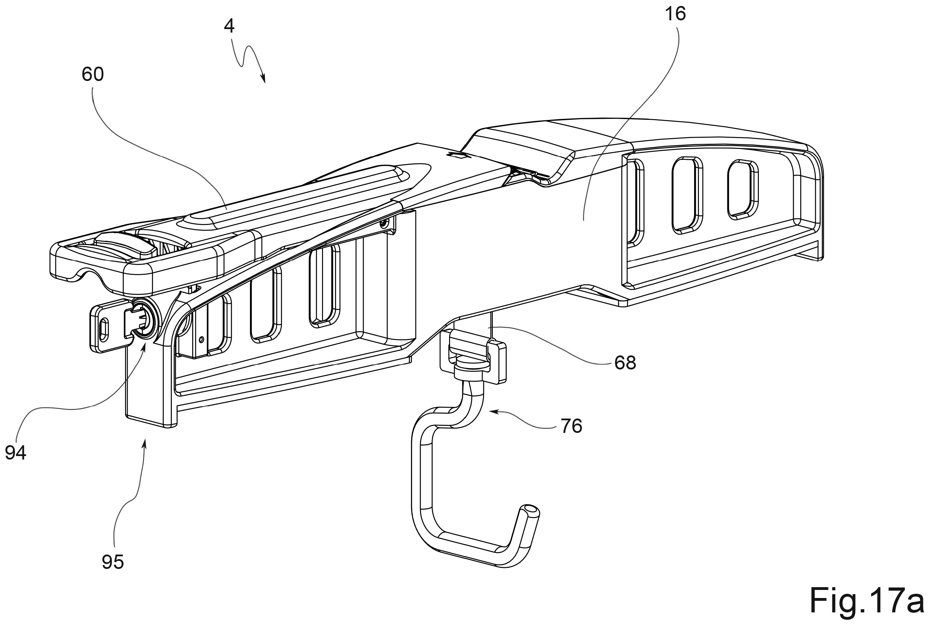

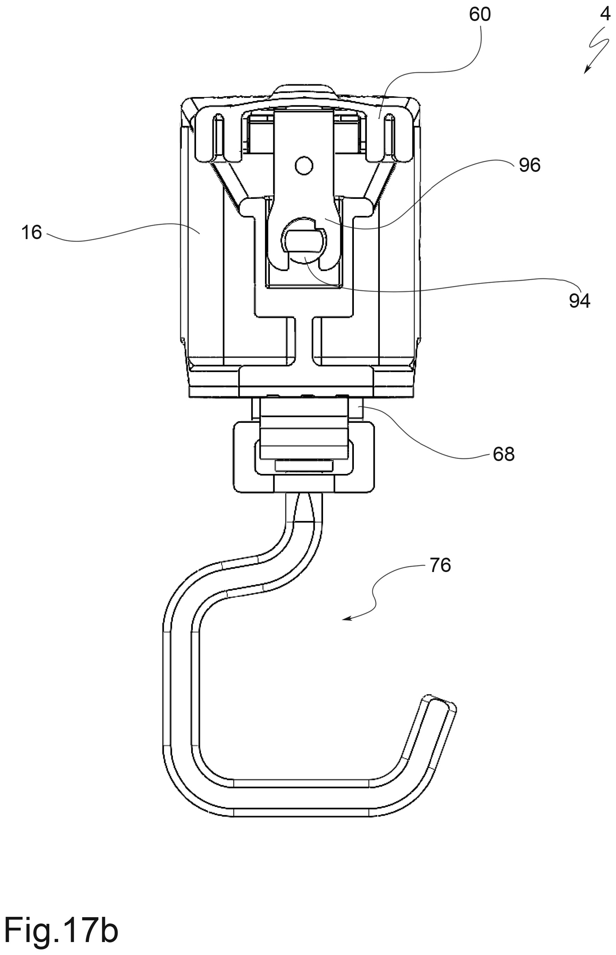

Lock 94 is configured so as to lock the closing portion 96, for example as undercut (Figure 17b), so as to prevent the actuation lever 60 from being lifted, when arranged in the securing or closing configuration. Preferably, the main body 16, at an upper wall 97 thereof, provides a seat 98 adapted to at least partially house the closing portion 96 when the actuation lever 60 is lowered to the closing position.

The operation of a ladder-locking device according to the present invention will now be described.

In particular, in order to secure ladder 8, the latter is arranged in advance on at least one bar 14 of the roof rack 12 previously anchored to the roof of the vehicle.

Then the main body 16 of the ladder clamping device 4 is rested on ladder 8, and ladder 8 is crossed by the flexible locking means 68, taking care to fasten the locking buckle 76 at a point on bar 14 of the frame of the roof rack 12. For example, it is possible to surround bar 14 of the frame of the roof rack 12 with the flexible locking means 68 and secure the locking buckle 76 onto the same flexible locking means 68, which may be inserted into slit 78 of the flexible locking means 68. Alternatively, it is possible to fasten the locking hook 76 directly on a bar 14 of the frame of the roof rack 12.

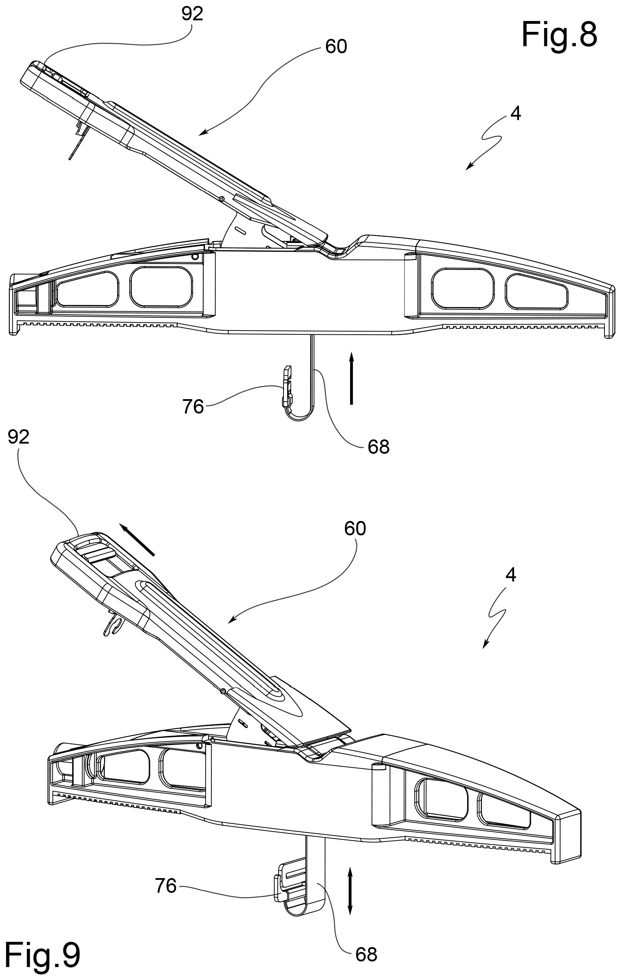

At this point, the tensioning sequence of the flexible locking means 68 for solidly anchoring stepladder 8 to the roof rack 12 may begin, as illustrated in Figures 8 to 10 (where the stepladder and the bar have been omitted).

In particular, the actuation lever 60 is rotated upwards, i.e., away from the main body 16, for example by about 30°, preferably via handle 92, so as to allow the rotation of spool 48 in a winding direction, and thus a traction direction of the flexible locking means 68 (Figure 8).

The locking/unlocking element 86 is actuated so as to disengage the actuation lever 60 from spool 48, which is idle, i.e. free to rotate under the action of the return spring 64. Thereby, the flexible locking means 68 will tend to wind onto spool 48. Under this condition, the operator may also unwind the return spring 64 so as to adjust the length of the flexible locking means 68 with respect to the roof rack 12 (Figure 9).

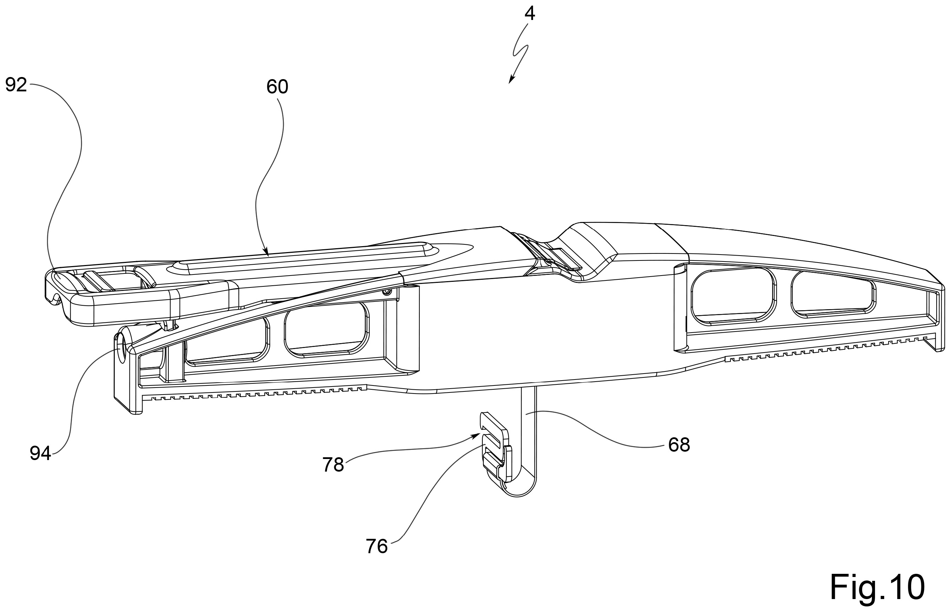

Finally, the locking/unlocking element 86 is actuated again to return it to the lowered or horizontal position (Figure 10).

When it is in the closing configuration, i.e. with the actuation lever 60 lowered, the closing portion 96 is inserted into the seat 98 formed on the upper wall 97, and may therefore be locked by acting on lock 94.

The method of assembling a ladder clamping device according to the present invention is also described.

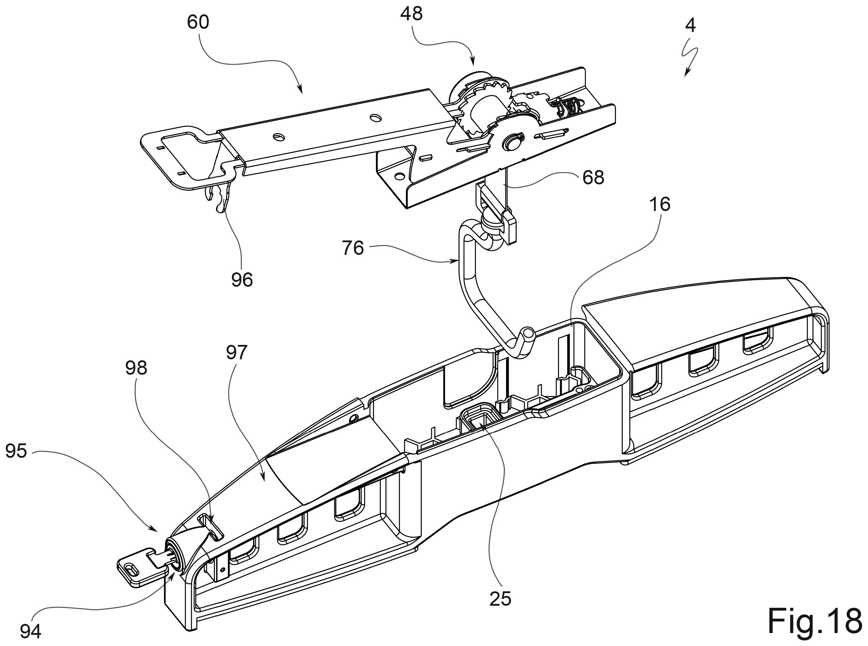

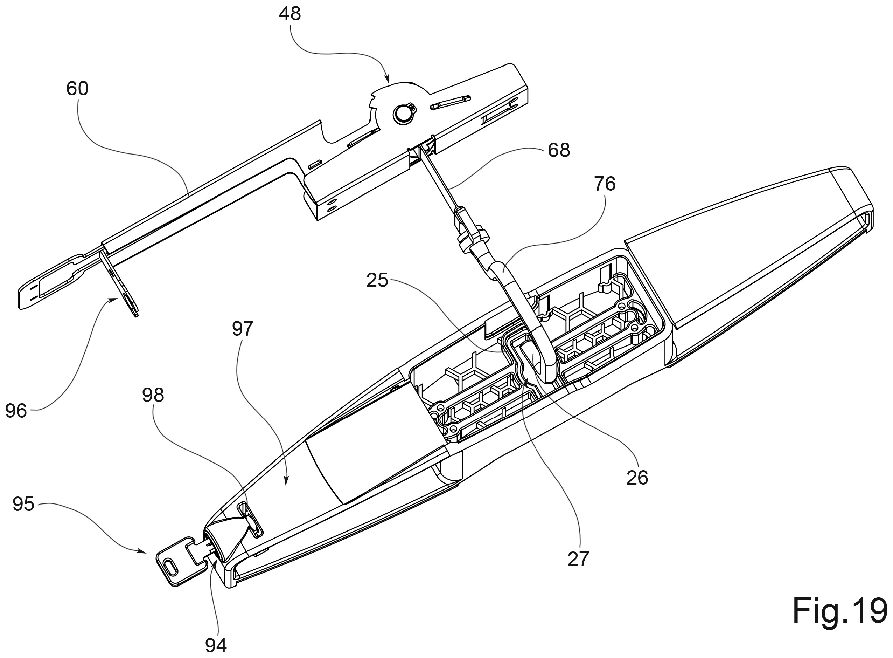

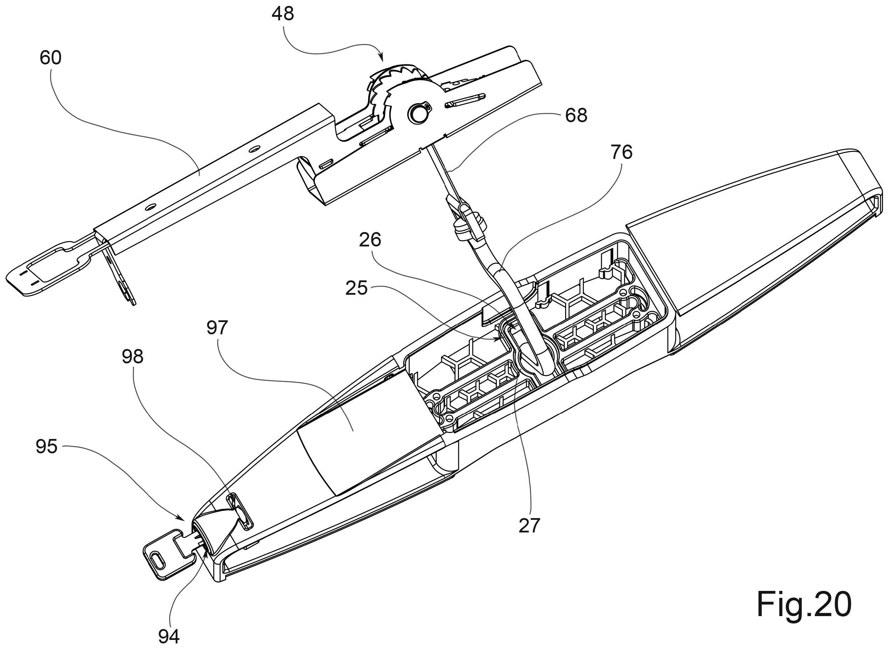

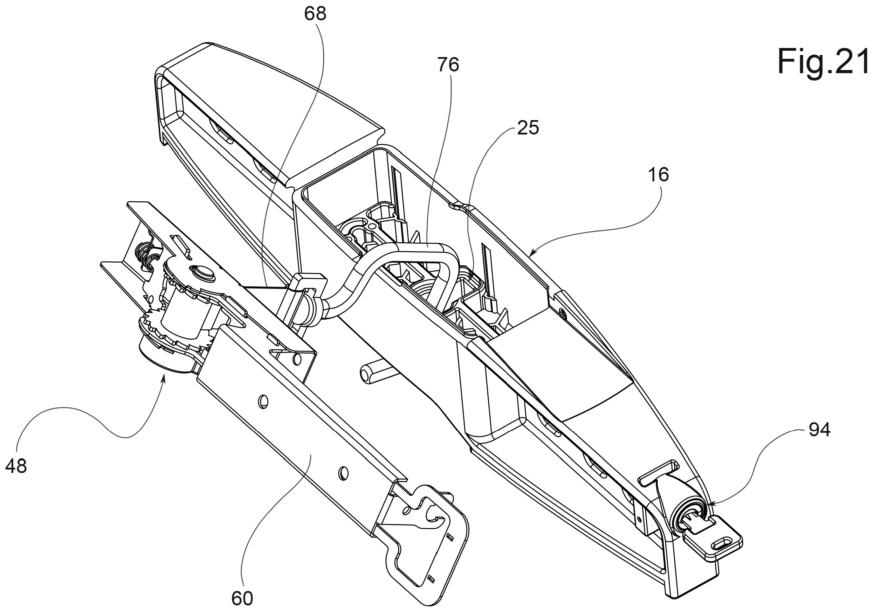

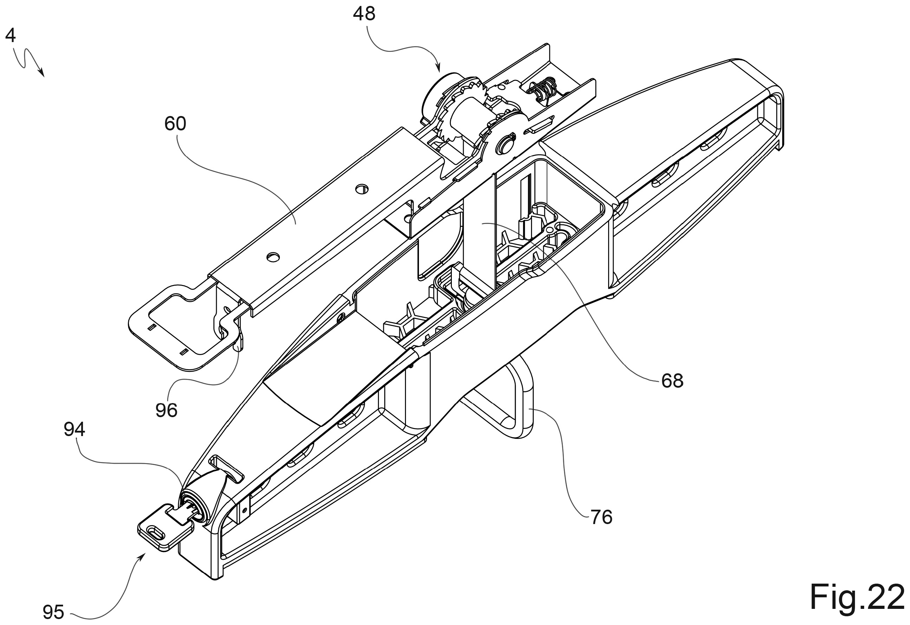

In particular, it begins with the step of preassembling the actuation lever 60 with spool 48 and the relative flexible locking means 68, which ends with the locking buckle or locking hook 76 on the main body 16, on the side of the upper wall 97 thereof. This operation provides passing the locking buckle or locking hook 76 through the through opening 25 without forcing or stressing. In fact, said through opening 25 is shaped so as to allow the passage of the locking buckle or locking hook 76 (Figures 18-22).

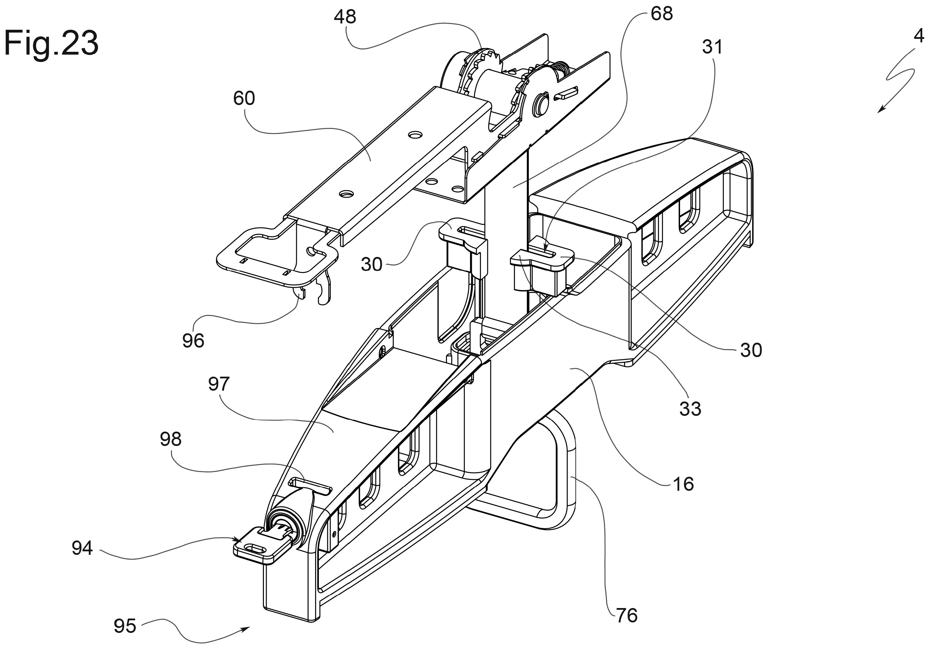

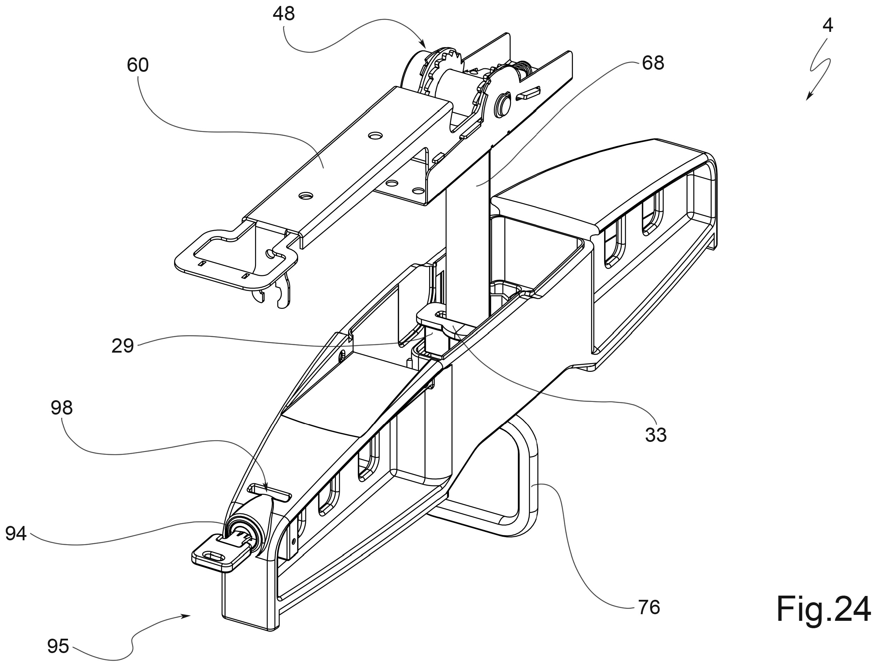

Further, the shells 30 are associated with each other on opposite sides with respect to the flexible locking means 68, until they interlock in the through opening 25, after passing through the through opening 25 with the locking buckle or locking hook 76 (Figures 23-24).

The engagement between the shells 30 and the through opening 25 occurs by the abutment of said upper edge 33, which acts as an undercut on the perimeter of the through opening 25.

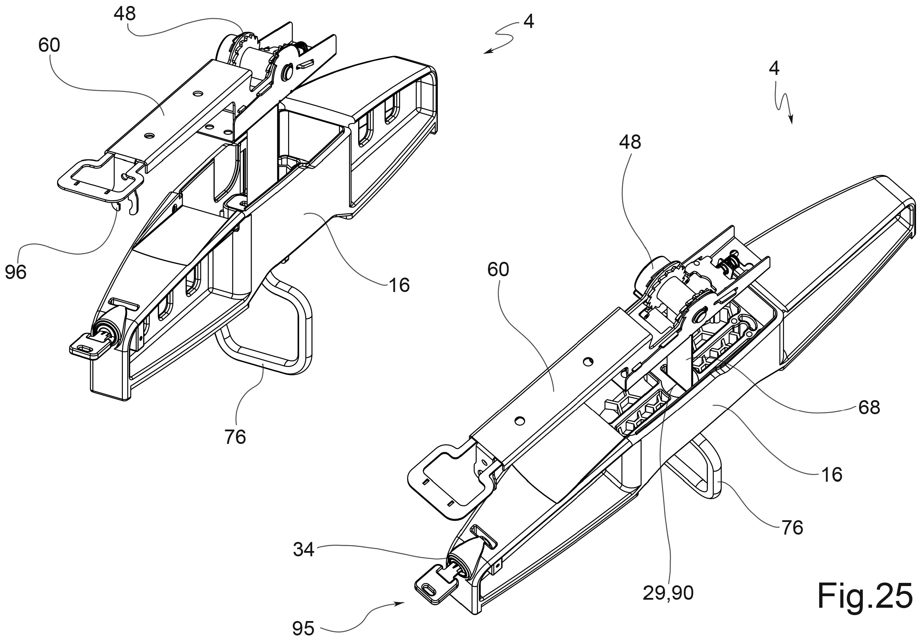

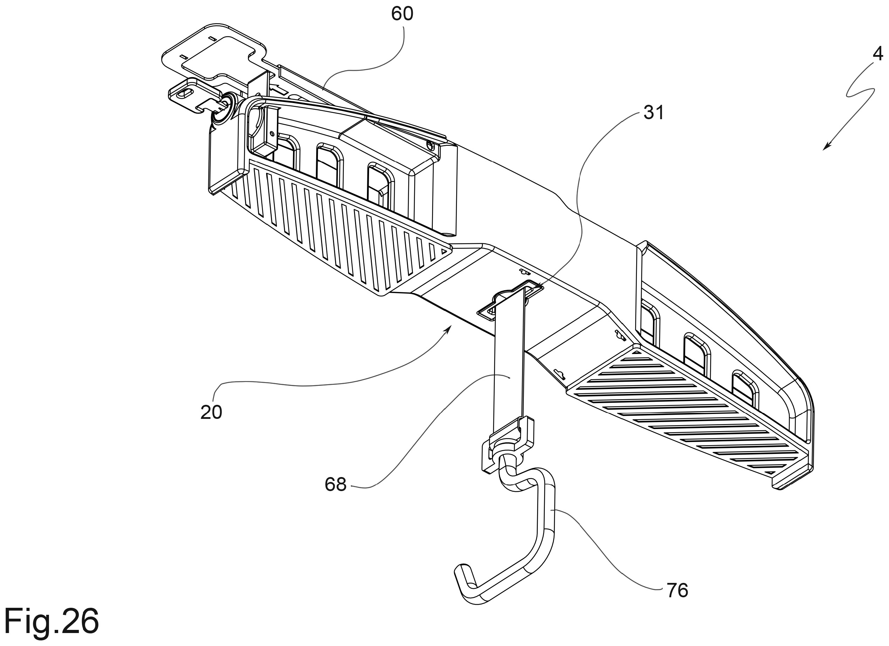

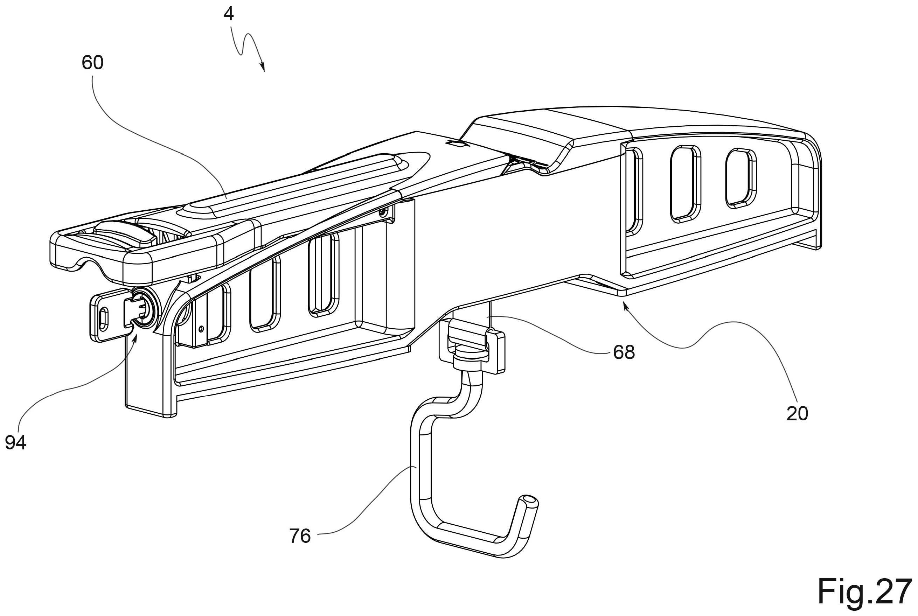

Assembly is therefore easy and may be completed easily even starting from a preassembled spool (Figures 25-27).

As can be appreciated from the above description, the present invention allows overcoming the drawbacks introduced in the prior art.

In particular, the ladder clamping device according to the invention is highly versatile and is adapted to almost all types of ladders on the market since it does not comprise a rigid rod with a rigid hook, rather a flexible and adjustable strap.

Thereby, the negative effects on the aerodynamics of the vehicle, as well as turbulence and undesired noise, are reduced.

There are also no safety risks because there are no rigid cantilevered bodies.

The solution according to the invention is also particularly ergonomic to use, also by virtue of the locking/unlocking handle.

The use of a locking buckle simplifies assembly and reduces the overall costs of the ladder clamping device. Further, the flexible locking means allow rapid winding around the roof rack bars, regardless of the specific geometry thereof. In other words, flexible means, such as, for example, a strap, are adapted to any section, adhering over almost the entire surface of the roof rack bar, unlike known solutions providing a rigid hook, typically metal.

The assembly of the ladder clamping device is particularly economical, fast, and advantageous by virtue of the fact that it is possible to preassemble the spool assembly and insert it into the main body through the through opening subsequently closed by means of the shells.

In order to meet contingent, specific needs, those skilled in the art may make several changes and variations to the solutions described above.

The scope of protection of the invention is defined by the following claims.

### LIST OF REFERENCES:

4: ladder clamping device
8: ladder
12: roof rack
14: bar
16: main body
20: lower wall
24: central base
25: through opening
26: slot
27: central enlargement
28: lateral recesses
29: removable cap
30: shells
31: through channel
32: lower knurl
33: upper edge
36: lateral containment strips
40: lightening portions
44: ratchet mechanism
48: spool
52: external toothing
56: pin
60: actuation lever
64: return spring
68: flexible locking means
72: first end
76: locking buckle or locking hook
77: rotatable eyelet
78: slit
80: second end
82: first stop
84: first spring
86: locking/unlocking element
88: second stop
90: second spring
92: handle
94: lock
95: lateral end
96: closing portion
97: upper wall
98: seat
X-X: longitudinal direction
Z-Z: vertical direction
R-R: rotation axis

## Claims

1. Ladder clamping device (4) for vehicles, comprising:
- an elongated main body (16), parallel to a longitudinal direction (X-X), the main body (16) being provided with a lower wall (20) facing a ladder (8) to be secured,
- a ratchet mechanism (44), housed in said main body (16) and comprising a spool (48) rotatable about a rotation axis (R-R) perpendicular to the longitudinal direction (X-X), the spool (48) being provided with an external toothing (52) and a return spring (64),
- the ratchet mechanism (44) being mechanically connected to an actuation lever (60) protruding from said main body (16) and parallel to said longitudinal direction (X-X), the actuation lever (60) being configured to actuate the rotation of the spool (48), thus overcoming the resistance of the return spring (64),
- flexible locking means (68) for said ladder (8), fastened to the spool (48) at a first end (72) thereof and provided with a locking buckle and/or a locking hook (76) at a second end (80), opposite to said first end (72),
- the flexible locking means (68) being at least partially wound on the spool (48) so as to wind and unwind in agreement with the rotation direction of the spool (48),
- wherein said return spring (64) returns the spool (48) in rotation according to a winding direction of the flexible locking means (68).

2. Ladder clamping device (4) for vehicles according to claim 1, wherein the rotating spool (48) is associated with at least a first stop (82) normally engaged on the external toothing (52) and shaped so that, when in the engagement configuration, it makes the actuation lever (60) integral with the spool (48) rotatable in a winding direction of the flexible locking means (68) and allows the rotation of the spool (48) in said winding direction of the flexible locking means (68).

3. Ladder clamping device (4) for vehicles according to claim 2, wherein said first stop (82) is biased into abutment against the external toothing (52) by a first spring (84) and wherein the actuation lever (60) is provided with a locking/unlocking element (86), operatively connected to said first stop (82), so as to allow the transition of the first stop (82) from an engagement condition to a disengagement condition with respect to the external toothing (52).

4. Ladder clamping device (4) for vehicles according to claim 3, wherein said locking/unlocking element (86) is a slider that is movable so as to allow the disengagement of the first stop (82) from the external toothing (52), and wherein said movable slidable is part of a plate that is integral with said first stop (82).

5. Ladder clamping device (4) for vehicles according to any one of claims 2 to 4, wherein the rotatable spool (48) is provided with a second stop (88) always engaged with the external toothing (52), in agreement with the first stop (82), wherein said second stop (88) is biased into abutment against the external toothing (52) by a second spring (90).

6. Ladder clamping device (4) for vehicles according to any one of claims 1 to 5, wherein said actuation lever (60) is provided with a lock (94) for locking the actuation lever (60) on the main body (16).

7. Ladder clamping device (4) for vehicles according to claim 6, wherein the lock (94) is arranged on a lateral end (95) of the main body (16), wherein the actuation lever (60) is integral with a closing portion (96), shaped so that, in a lowered configuration of the actuation lever (60), said closing portion (96) is aligned with the lock (94), said lock (94) being configured so as to lock the closing portion (96) so as to prevent the actuation lever (60) from being lifted, when arranged in a locking or closing configuration.

8. Ladder clamping device (4) for vehicles according to claim 7, wherein the main body (16), at an upper wall (97) thereof, provides a seat (98) adapted to at least partially house the closing portion (96) when the actuation lever (60) is lowered into the closing position.

9. Ladder clamping device (4) for vehicles according to any one of claims 1 to 8, wherein said return spring (64) is a spiral spring, coaxial to said spool (48).

10. Ladder clamping device (4) for vehicles according to any one of claims 1 to 9, wherein the lower wall (20) comprises a central base (24) having a through opening (25) with a slot (26) and a central enlargement (27), and wherein the central base (24) is associated with a removable cap (29), at least partially counter-shaped with respect to the through opening (25) so as to reduce the passage lumen overall, wherein the locking buckle or locking hook (76) is shaped so as to be able to pass through said through opening (25) of the central base (24) of the main body (16).

11. Ladder clamping device (4) for vehicles according to claim 10, wherein the removable cap (29) is made of two shells (30) that are separable from each other, which, once associated with each other, define a through channel (31) shaped to allow the passage and sliding of the flexible locking means (68) and to prevent the passage of the locking buckle or locking hook (76).

12. Ladder clamping device (4) for vehicles according to claim 11, wherein the shells (30) have an upper edge (33) defining an undercut with respect to said through opening (25), according to a direction of extraction of the shells (30) from inside the main body (16) downwards, i.e. towards the associable ladder 8.

13. Ladder clamping device (4) for vehicles according to any one of claims 1 to 12, wherein said lower wall (20) is at least partially provided with a surface treatment or processing adapted to increase the grip with the ladder (8), and/or with lateral containment strips (36), and/or wherein said lower wall (20) is associated with a plate or co-molded portion configured so as to increase the grip with the associable ladder (8).

14. Ladder clamping device (4) for vehicles according to any one of claims 1 to 13, wherein the flexible locking means (68) for said ladder (8) comprise a strap, a rope, a cable, a chain or similar elements that are at least partially flexible and windable around the spool (48).

15. A method of assembling a ladder clamping device according to any one of claims 1 to 14, comprising the steps of:
- providing, on the lower wall (20), a through opening (25) having a slot (26) and a central enlargement (27),
- preassembling the actuation lever (60) with the spool (48) and the relative flexible locking means (68), ending with the locking buckle or locking hook (76), on the main body (16), on the side of an upper wall (97) of the main body (16),
- passing the locking buckle or locking hook (76) through said through opening (25) without forcing or effort.

16. A method of assembling a ladder clamping device according to claim 15, comprising the steps of:
- providing a removable cap (29), at least partially counter-shaped with respect to the through opening (25) so as to reduce the passage lumen overall, wherein the locking buckle or locking hook (76) is shaped so as to be able to pass through said through-opening (25) of the central base (24) of the main body (16),
- said removable cap (29) comprising a pair of shells (30), associated with each other on opposite sides with respect to the flexible locking means (68) until they interlock in the through opening (25), after passing through the through opening (25) with the locking buckle or locking hook (76).
